# EUROPEAN PATENT APPLICATION

(11) **EP 2 775 264 A2**
(43) Date of publication of application: **10.09.2014**
(21) Application number: 14158409.4
(22) Date of filing: 07.03.2014
(51) Int. Cl.: G01D 3/036, G01K 1/00, G01L 1/00

(54) **Time synchronized redundant sensors**

(30) Priority: 07.03.2013 US 201313788779
(71) Applicant: Sensata Technologies Massachusetts, Inc., Attleboro MA 02703 (US)
(72) Inventor: Wolf, Eric A., Norwood, MA 02062 (US); Corkum, David L., Attleboro, MA 02703 (US); Maher, Thomas R., Rehoboth, MA 02769 (US); Nicholls, Christopher A., Cumberland, RI 02864 (US)
(74) Representative: Legg, Cyrus James Grahame

(57) **Abstract**

A redundant sensor (10) includes at least two sensing elements (6). The redundant sensor includes methods and apparatus for time-stamping and combining data from the sensing elements (6). A method of use and additional embodiments are disclosed.

## Description

### BACKGROUND OF THE INVENTION

### 1. Field of the Invention.

The invention disclosed herein relates to redundant use of sensors such as temperature sensors or pressure sensors, and in particular, provides for coordination of redundant sensing.

### 2. Description of the Related Art.

A variety of industrial processes call for knowledge of ambient temperature and pressure conditions. For example, in automotive systems, it is desirable to know pressure and temperature of gasses so that combustion may be more efficiently controlled. A number of sensors have been devised to address this need.

Generally, these sensors provide for monitoring of at least one of temperature and pressure on an ongoing basis. In some embodiments, the sensors are adapted for harsh environments. As one might surmise, some of these sensors are complicated (and therefore costly) devices.

It is widely recognized that the more complicated a device becomes, the more prone to failure it will be. Accordingly, some environmental sampling protocols call for use of redundant sensors.

Redundant sampling allows the system using the sensors to compare output of two (or more) sensors and to determine validity of the sensor measurement(s). In theory, single point faults on one sensor will not affect the output of the other sensor. If data from the two sensor measurements is in agreement, the system can make a reasonable assumption that both sensors are working properly. If data from the two (or more) sensors does not agree, the system can make a reasonable assumption that at least one of the sensors is faulted.

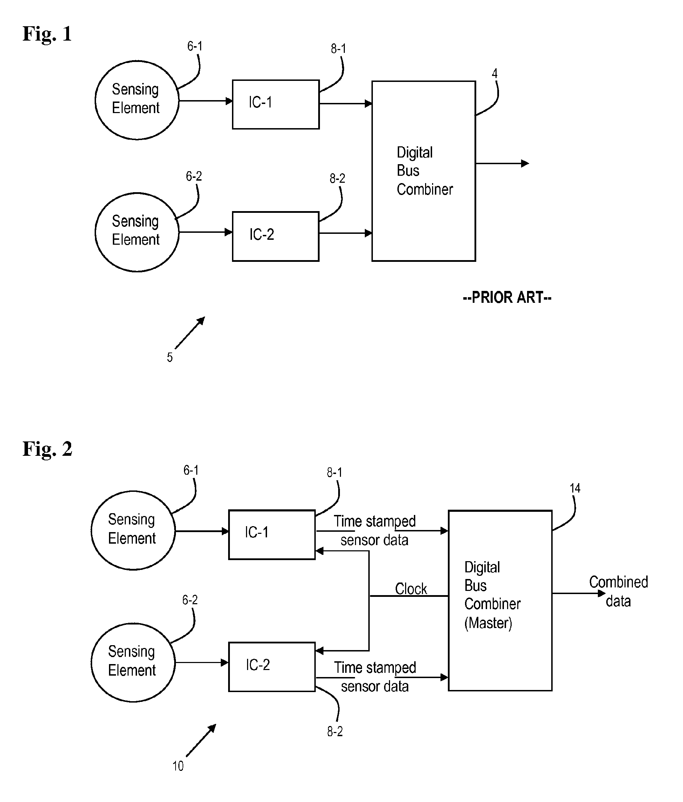

An example of a prior art solution for this problem is depicted in FIG. 1. In FIG. 1, an embodiment of a redundant sensor 5 is shown. In this example, the redundant sensor 5 includes a first sensing element 6-1 and a second sensing element 6-2. (Note that for simplicity, the reference numeral "6" is a general reference to a sensing element, and 6-X is to a specific sensing element. Further, this convention is generally used herein). Each sensing element 6 is oriented in a sensing environment (i.e., an environment for sensing of ambient conditions). Each sensing element 6-1, 6-2 is coupled to a respective sensing circuit 8, such as integrated circuit (IC) 8-1, 8-2. Each sensing circuit 8 provides for powering the sensing element 6, signal receipt, amplification and the like. Each sensing circuit 8 (referred to hereafter as "IC," merely for convenience) communicates data to another device, such as digital bus combiner 3. The digital bus combiner 3 may then communicate data from the sensors 2 to yet another system.

Generally, in an embodiment such as the one shown in Fig. 1, the digital bus combiner 3 takes the data from each IC 8, and places the data onto a common digital output bus (not shown). A system that makes use of the data will receive a single message that contains data from each of the two sensors. A comparison may be made by the system to determine if the sensors provide adequately correlated data.

Generally, this type of arrangement may work adequately. That is, under static conditions, this type of combining scheme may be adequate. However, under dynamic conditions, such as where the sensors are measuring liquid fuel pressure, there may be constant pulsations or slewing pressures in the system. If the two (or more) sensors are operating asynchronously, they will measure the pressure at different times. The digital bus combiner 3 will take the asynchronous data, combine it into one communications packet, and send it to the system. If the sampling delay between the two samples is long enough, then the sensors may have properly measured pressure at two very different levels. A system comparison of those two asynchronous samples may show a significant discrepancy, inadvertently causing a false report of a faulty sensor.

Thus, what are needed are methods and apparatus to provide for correlation of data between two or more sensors, where the data is provided in an ongoing basis. Preferably, the methods and apparatus greatly reduce false positive reporting of sensor faults.

### SUMMARY OF THE INVENTION

In a first embodiment, a sensor is provided. The sensor includes at least two sensing elements configured for asynchronously sensing a stimulus and providing sensed data; a clock configured to provide a time for each sensing; at least one signal conditioning circuit configured to provide conditioned data from the sensed data; and, a combiner circuit configured to provide a digital data sequence that includes at least one of the conditioned data and the time between the sensed data.

With regards to the first embodiment, in some embodiments thereof, at least one of the signal conditioning circuits includes electronics for operating a respective sensing element. In some embodiments, the sensor further includes at least one sensing circuit for controlling the sensing, and in some further embodiments, at least one of the sensing circuits is configured to receive a current time. In some embodiments, at least one of a sensing circuit, the signal conditioning circuit and the combiner circuit is configured to at least one of receive the sensed data, receive time from the clock, associate a sensing time with the sensed data, and provide combined data. In some embodiments, the at least two sensing elements are configured to sense at least one of temperature and pressure. In some embodiments, the signal conditioning circuit is configured to compensate the sensed data for an influencing factor. In some embodiments, at least one of a sensing circuit, the signal conditioning circuit and the combiner circuit is configured to overwrite data with a predetermined value.

In a second embodiment, a sensor is provided and includes: at least two sensing elements configured for synchronously sensing a stimulus and providing sensed data; at least one signal conditioning circuit configured to provide conditioned data from the sensed data; and, a combiner circuit configured to provide a digital data sequence that includes the conditioned data.

With regards to the second embodiment, in some embodiments thereof, the sensor further includes a controller for initiating the sensing, and the controller may include a clock. In some embodiments, at least one of the signal conditioning circuits comprises electronics for operating a respective sensing element. In some embodiments, the sensor further includes at least one sensing circuit for controlling the sensing. In some embodiments, at least one of a sensing circuit, the signal conditioning circuit and the combiner circuit is configured to at least one of receive the sensed data, receive time from a clock, associate a sensing time with the sensed data, and provide combined data. In some embodiments, at least two sensing elements are configured to sense at least one of temperature and pressure. In some embodiments, the signal conditioning circuit is configured to compensate the sensed data for an influencing factor. In some embodiments, at least one of a sensing circuit, the signal conditioning circuit and the combiner circuit is configured to overwrite data with a predetermined value.

In a further embodiment, a method for providing combined data from a redundant sensor is provided. The method includes receiving sensed data from each of at least two sensing elements; receiving time data that correlates to a sampling time for each of the at least two sensing elements; associating the time data with the sensed data to provide combined data; and conditioning the combined data to provide conditioned data.

With regards to the further embodiments, in some embodiments thereof, the method further includes generating the current time with at least one of a digital counter, a digital communication, and a phase-lock-loop correlation. In some embodiments, the method further includes initiating sampling according to the current time. In some embodiments, the method further includes overwriting a register comprising one of sensed data, time data, combined data and conditioned data with a predetermined value. In some embodiments, conditioning includes at least one of accepting, adjusting and rejecting the combined data.

### BRIEF DESCRIPTION OF THE DRAWINGS

The features and advantages of the invention are apparent from the following description taken in conjunction with the accompanying drawings in which:
FIG. 1 is a flow chart depicting aspects of a prior art redundant sensor;
FIGS. 2 through 5 are flow charts depicting embodiments of a redundant sensor according to the teachings herein; and,
FIG. 6 depicts a relationship of data storage registers for transmission of data from the redundant sensor.

### DETAILED DESCRIPTION OF THE INVENTION

Disclosed herein is a redundant sensor. In the exemplary embodiment, the redundant sensor is configured for sensing pressure. The redundant sensor, which may be used for sensing other conditions (such as temperature), provides temporal correlation of data between sensing elements thus reducing false reporting of sensor faults, and increasing the reliability of sensor data. Generally, the redundant sensor is adapted for industrial use, such as in settings where a long useful life in a harsh environment is required.

Refer now to FIG. 2, which provides a flow chart depicting aspects of an exemplary redundant sensor 10. In this example, the redundant sensor 10 includes a first sensing element 6-1 and a second sensing element 6-2. Each sensing element 6 is configured to be oriented in a sensing environment (i.e., an environment for sensing of ambient conditions). Each sensing element 6 is coupled to respective sensing circuit 8, such as an integrated circuit (IC) 8-1, 8-2. Each of the sensing circuits 8 provides for powering the sensing element 6, signal receipt, amplification and the like. Each sensing circuit 8 (referred to hereafter as "IC," merely for convenience) communicates data to another device, such as digital bus controller 3. The digital bus combiner 14 may then communicate data from the sensors 2 to yet another system.

In the embodiment depicted in FIG. 2, the digital bus combiner 14 includes a clock. On an ongoing basis, the digital bus combiner 14 provides the current time to each of the respective ICs, 8-1, 8-2. Each IC, 8-1, 8-2, associates the current time with current sample data. Stated another way, each IC, 8-1, 8-2, may "time-stamp" the sensor data. The sensor data is then communicated to the digital bus combiner 14. The digital bus combiner 14 will then combine the sensor data as appropriate and pass the combined data (i.e., a data set that includes time-stamped data from each of the sensing elements 6).

It should be noted that the redundant sensor 10 may accommodate a plurality of sensing elements 6. Further, a variety of components may be used as sensing elements 6, as well as supporting electronics and digital bus combiners 14. In addition, the redundant sensor 10 may accommodate sensing of diverse data, such as pressure and temperature. In short, embodiments of the redundant sensor 10 may practically only be limited by needs or constraints of a user, designer, manufacturer, or other similarly interested party.

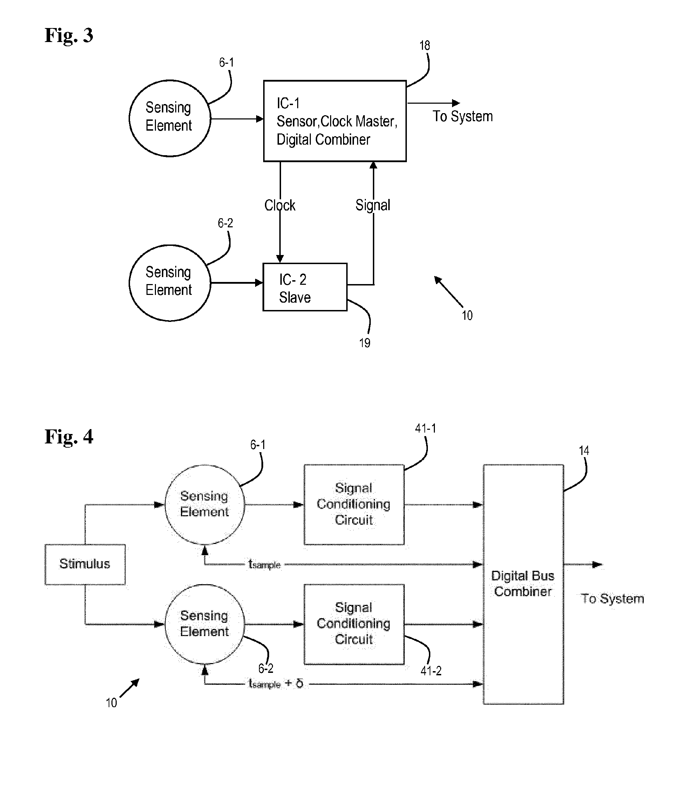

Another embodiment is provided in FIG. 3. As shown in FIG. 3, the duties of the digital bus combiner 14 have been re-assigned. That is, in FIG. 3, a first IC 18 (or "master") fulfills the role of the sensing circuit 8-1, as well as the role of the digital bus combiner 14. In this embodiment, the first IC 18 sends the clock signal (i.e., current time) to a second IC 19 (or "slave"). In turn, the second IC 19 receives the current time, time-stamps data from the sensing element 6-2, and sends the time-stamped sensor data to the first IC 18. Similarly, the first IC 18 makes use of the current time to time-stamp sensor data from the respective sensing element 6-1. The first IC 18 will appropriately combine the time-stamped sensor data as appropriate and pass the combined data.

In this embodiment, it is not required that the first IC 18 and the second IC 19 be of different types. That is, the first IC 18 and the second IC 19 could both be of the same design, and simply configured differently, such as through wiring, programming, and the like.

The clock mechanism may be provided in a variety of ways. For example, the clock may be a sampling clock where a rising or falling edge is a signal to initiate sampling. The clock may be a slow clock in which each IC 8 has an internal phase-lock-loop (PLL) to phase lock onto slow clock. The clock may rely on a digital signal, such as one communicated from the digital bus combiners 14. The timestamp may be generated by a free-running digital counter, such as in the digital bus combiner 14. Upon receiving a sensor signal from either channel (i.e., either sensing element), the counter is read and the value may then be associated with the corresponding sensor data.

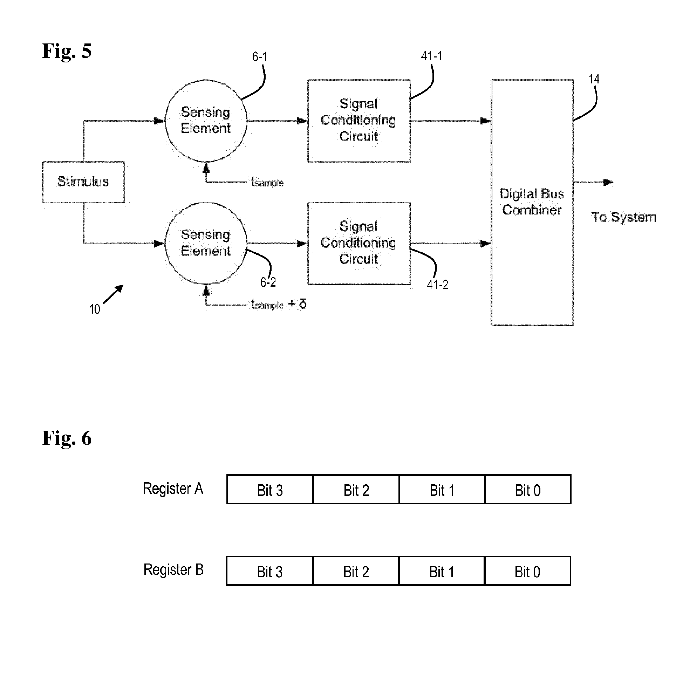

Some additional embodiments of the redundant sensor 10 are provided in FIGS. 4 and 5. As shown in FIG. 4, the redundant sensor 10 includes at least two sensing elements 6. The at least two sensing elements 6 are configured to sense the same property of a common stimulus. The output of the at least two sensing elements 6 is then sampled asynchronously as seen by the timing notations tₛₐₘₚₗₑ and t_{sample + δ}. The sampled signals from the at least two sensing elements 6 are then processed by at least one signal conditioning circuit 41 (41-1,41-2) before being passed to the digital bus combiner 14. Again the digital bus combiner 14 produces a single digital data sequence. The digital bus combiner 14 also receives at least one timing signal. Generally, the at least one timing signal includes enough information to determine a time difference between the sampled signals. The difference in time between samples of the signals along with the known fastest rate of change for the input stimulus may then be used to determine the allowed un-faulted difference between conditioned signals.

Comparatively speaking, asynchronous sampling involves the sampling of two or more signals with a large time delay between each of the sample intervals. The difference in timing can be considered large if it is of similar order of magnitude to or greater than the minimum timing resolution of the system based upon required input bandwidth or resolution of fastest input transient events. Asynchronous timing can take the form of timing offset between sampled signals or differences in sampling periods.

Generally, the signal conditioning circuit 41 is a circuit that transforms a signal from one of the sensing elements 6 into a "conditioned signal." A "conditioned signal" is a signal that contains desired properties of an output response. Stated another way, the "conditioned signal" includes data from the at least one sensing element 6, wherein that data has been adjusted to account for at least one influencing factor. An example of signal conditioning includes thermal compensation of a sampled signal, such that signal data is relatively constant with respect to temperature. Accordingly, each of the at least one signal conditioning circuit 41 may include at least one form of "conditioning data." The conditioning data may be presented as a data table, as a polynomial function and in other similarly useful forms. It should be understood that the signal conditioning circuit 41 may therefore include at least one input from an external component, such as a temperature sensor. Each of the sensing circuits 8-1, 8-2 (as well as the first IC 18 and the second IC 19) may serve as the signal conditioning circuit 41.

In the embodiment of FIG. 5, the redundant sensor 10 includes at least two sensing elements 6. The sensing elements 6 sense the same property of a common stimulus. The output of these sensing elements 6 is then sampled synchronously as indicated by the timing notations tₛₐₘₚₗₑ and t_{sample + δ}. Sampled signals from the sensing elements 6 are then processed by a respective signal conditioning circuit 41 before being passed to the digital bus combiner 14. The digital bus combiner 14 produces a single digital data sequence. In this embodiment of the redundant sensor 10, the digital bus combiner 14 does not receive a timing signal because the sensing elements 6 are sampled synchronously. As a result of synchronous sampling, the magnitude of the allowed difference between samples for determining un-faulted signals can be a constant that is predetermined.

Generally, "synchronous sampling" involves the sampling of two or more signals with a small difference in timing. The difference in timing can be considered small if the difference is considered to be significantly less than the timing resolution required to observe the fastest input transient events. Similarly, a difference in timing can be considered small if the difference is considered to be significantly less than the period associated with the required maximum system bandwidth.

Further reductions in false reporting of erroneous data may be realized through an enhanced communications technique useful in digital embodiments. More specifically, a known bit sequence (e.g., all zeros) may be stored in a periodically updated register immediately after executing a transfer of the contents of the register. Should the bit sequence be received by a receiving system, the bit sequence will be recognized as containing invalid data. An exemplary embodiment is provided, and may be considered in conjunction with FIG. 6.

In one embodiment, output of data is provided as follows. First, digital information packet, N, populates Register A (through serial or parallel transfer). The digital information packet, N, is then copied to Register B in parallel. At this point, Register A is overwritten to the predetermined specific value. This may be accomplished through use of another circuit path to Register A. The digital information packet, N, is then sent out serially on a digital bus, and in some cases, may be validated by a receiving system that has valid data (such as through CRC, signal plausibility, or the like). Next, another digital information packet, N+1, populates Register A, overwriting the previous content, and the process repeats.

Accordingly, observability of a specific low probability fault in digital data transmission for a pressure sensor (DFMEA to detection) is improved.

Various embodiments may be practiced. For example, in one embodiment, the output register may be serially populated and serially depopulated. In another embodiment, the output register may be parallel populated and serially depopulated.

In the event that a fault inhibits updating the output register, this solution enables the receiving system to detect the sensor based fault, and further enhances detectability of a fault.

Accordingly, provided herein are methods and apparatus where individual sensors or sensor subsystems may be configured to asynchronously sample an environment. The redundant sensor 10, which produces time-stamped data, enables a receiving system to make informed decisions about the environment as well as the health of sensing elements. For example, if the time-stamp between two data points is very short, it may be reasonable to compare the data with relative confidence. However, if the time-stamp reflects a relatively long interval, the system may accept, adjust or reject the data. Additionally, time-stamped data may also be used to monitor or assess the functionality of the sensing elements.

Further, receiving systems may be configured to make use of the combined data in ways previously not available. For example, algorithm(s) may be employed to interpolate data through averaging of the data, line-fitting of the data and the like.

It should be recognized that a variety of integrated circuits, sensing elements and other components may be used in the redundant sensor 10. Additionally, the sampling frequency, parameters or conditions for which sampling is conducted, sampling ranges and the like need not be limited. For example, the redundant sensor 10 may be used with sensors that have been configured for harsh environments, frequent sampling and the like.

For example, in some embodiments, the redundant sensor 10 includes at least one of a surface mount device (SMD) thermistor, a thermocouple or another type of temperature sensor. The redundant sensor 10 may include at least one of a pressure sensor that is configured to measure absolute pressure and/or gage pressure. In some embodiments, the pressure sensor includes a capacitive sensing element. In these embodiments, deflection of at least a portion of the capacitive element (due to pressure exerted thereon) results in a change to an output signal from the element. The change in the output signal can be correlated to the exerted pressure.

It should be recognized that the teachings herein are merely illustrative and are not limiting of the invention. Further, one skilled in the art will recognize that additional components, configurations, arrangements and the like may be realized while remaining within the scope of this invention. For example, configurations of sensors, circuitry and the like may be varied from embodiments disclosed herein. Generally, design and/or application of components of the redundant sensor is limited only by the needs of a system designer, manufacturer, operator and/or user and demands presented in any particular situation.

Various other components may be included and called upon for providing for aspects of the teachings herein. For example, additional materials, combinations of materials and/or omission of materials may be used to provide for added embodiments that are within the scope of the teachings herein.

When introducing elements of the present invention or the embodiment(s) thereof, the articles "a," "an," and "the" are intended to mean that there are one or more of the elements. Similarly, the adjective "another," when used to introduce an element, is intended to mean one or more elements. The terms "including" and "having" are intended to be inclusive such that there may be additional elements other than the listed elements.

In the present application a variety of variables are described, including but not limited to components, conditions, and performance characteristics. It is to be understood that any combination of any of these variables can define an embodiment of the invention. For example, a combination of a particular material for the body, with a set of sensors, under a particular range of a given environmental condition, but the specific combination might not be expressly stated, is an embodiment of the invention. Other combinations of articles, components, conditions, and/or methods can also be specifically selected from among variables listed herein to define other embodiments, as would be apparent to those of ordinary skill in the art.

While the invention has been described with reference to exemplary embodiments, it will be understood by those skilled in the art that various changes may be made and equivalents may be substituted for elements thereof without departing from the scope of the invention. In addition, many modifications will be appreciated by those skilled in the art to adapt a particular instrument, situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A sensor (10) comprising:
at least two sensing elements (6) configured for synchronously sensing a stimulus and providing sensed data;
at least one signal conditioning circuit (41) configured to provide conditioned data from the sensed data; and,
a combiner circuit (14) configured to provide a digital data sequence that includes the conditioned data.

2. The sensor (10) as in claim 1, further comprising a controller (3) for initiating the sensing.

3. The sensor (10) as in claim 2, wherein the controller (3) comprises a clock.

4. The sensor (10) as in claim 1, wherein at least one signal conditioning circuit (41) comprises electronics for operating a respective sensing element (6).

5. The sensor (10) as in claim 1, further comprising at least one sensing circuit (8) for controlling the sensing.

6. The sensor (10) as in claim 1, wherein at least one of a sensing circuit (8), the signal conditioning circuit (41) and the combiner circuit (14) is configured to at least one of receive the sensed data, receive time from a clock, associate a sensing time with the sensed data, and provide combined data.

7. The sensor (10) as in claim 1, wherein the at least two sensing elements (6) are configured to sense at least one of temperature and pressure.

8. The sensor (10) as in claim 1, wherein the signal conditioning circuit (41) is configured to compensate the sensed data for an influencing factor.

9. The sensor (10) as in claim 1, wherein at least one of a sensing circuit (8), the signal conditioning circuit and the combiner circuit (14) is configured to overwrite data with a predetermined value.

10. A method for providing combined data from a redundant sensor, the method comprising:
receiving sensed data from each of at least two sensing elements (6);
receiving time data that correlates to a sampling time for each of the at least two sensing elements;
associating the time data with the sensed data to provide combined data; and
conditioning the combined data to provide conditioned data.

11. The method as in claim 10, further comprising generating the current time with at least one of a digital counter, a digital communication, and a phase-lock-loop correlation.

12. The method as in claim 10, further comprising initiating sampling according to the current time.

13. The method as in claim 10, further comprising overwriting a register comprising one of sensed data, time data, combined data and conditioned data with a predetermined value.

14. The method as in claim 10, wherein conditioning comprises at least one of accepting, adjusting and rejecting the combined data.
